(19) Europäisches Patentamt
European Patent Office
Office européen des brevets

(11) Publication number : **0 350 986 B1**

# EUROPEAN PATENT SPECIFICATION

(12)

(45) Date of publication of patent specification :
22.04.92 Bulletin 92/17

(51) Int. Cl.⁵ : **A23D 9/00**, A21D 2/16,
A21D 10/00

(21) Application number : 89201703.9

(22) Date of filing : 27.06.89

(54) **Fatty composition.**

(30) Priority : 27.06.88 GB 8815224

(43) Date of publication of application :
17.01.90 Bulletin 90/03

(45) Publication of the grant of the patent :
22.04.92 Bulletin 92/17

(84) Designated Contracting States :
AT BE CH DE ES FR GB GR IT LI NL SE

(56) References cited :
EP-A- 0 034 858
EP-A- 0 037 753
EP-A- 0 236 288
EP-A- 0 271 963
EP-A- 0 291 106
EP-A- 0 307 152
US-A- 4 461 782
JOURNAL OF FOOD SCIENCE, vol. 51, no. 5,
1986, pages 1276-1279, Chicago, Illinois, US;
S.E. EBELER et al.: "White layer cake batter
emulsion characteristics: Effects of sucrose
ester emulsifiers"

(73) Proprietor : **UNILEVER NV**
**Burgemeester s'Jacobplein 1 P.O. Box 760**
**NL-3000 DK Rotterdam (NL)**
(84) **BE CH DE ES FR GR IT LI NL SE AT**

Proprietor : **UNILEVER PLC**
**Unilever House Blackfriars P.O. Box 68**
**London EC4P 4BQ (GB)**
(84) **GB**

(72) Inventor : **Lansbergen, Adrianus Jacobus**
**Jan van Arkelstraat 70**
**NL-3132 VN Vlaardingen (NL)**
Inventor : **Liefkens, Theodorus Johannes**
**Assedreef 9**
**NL-3146 AB Maassluis (NL)**

(74) Representative : **Mulder, Cornelis Willem**
**Reinier, Dr. et al**
**UNILEVER N.V. Patent Division P.O. Box 137**
**NL-3130 AC Vlaardingen (NL)**

EP 0 350 986 B1

## Description

The present invention relates to a fatty composition, and in particular to a fatty composition in which part of the conventional triglyceride fat has been replaced by non-digestible polyol fatty acid polyester. The present invention is particularly concerned with a fatty composition for use in the preparation of batter, toppings, butter creams and the like. It further relates to batter products, aerated fatty compositions and cake containing a mixture of glyceride fat and polyol fatty acid polyester.

In the western world 30 to 50 % of the energy intake is due to the consumption of fats and oils. Of this amount about 40 % is consumed as 'visible' fat, such as butter, margarine, lard, shortening and edible oils. A considerable proportion of the 'visible' fats is introduced into the average diet by consumption of food products in which fat has been incorporated, such as pastries, biscuits, cakes, cream-fillings, and like products.

In view of the health hazards connected to obesity and unbalanced fat-intake there is a continuous interest in food products having a reduced caloric content. An attractive route to reduction of the caloric content in food products, such as in particular the above-referred-to bakery products and the fatty compositions such as margarine and shortenings used therefor, is replacement of conventional digestible fats and oils by non-digestible fat substitutes.

Polyol fatty acid polyesters, and in particular, the sugar fatty acid polyesters, such as e.g. the sucrose fatty acid polyesters, are known as suitable low-calorie fat-replacers in edible products. Substantially indigestible for human beings they have physical and organoleptic properties very similar to triglyceride oils and fats conventionally used in edible products. Polyol fatty acid polyesters are also reported to have use as pharmaceutical agents e.g. in view of their ability to take up fat-soluble substances, such as in particular cholesterol, in the gastro-intestinal tract, and subsequently remove those substances from the human body.

Edible fat-containing products comprising indigestible polyol fatty acid polyesters are known in the art, and described in e.g. US 3,600,186, US 4,005,195, US 4,005,196, US 4,034,083 and EP 0 233 856, and EP 0 235 836.

The application of sucrose polyesters in bakery products has been disclosed in US 4,461,782. In this publication it is described to prepare dough products via a process including the admixture of liquid sucrose polyesters, high melting triglyceride fat and other dough ingredients. The use of polyol fatty acid polyesters which are liquid at body temperature, are reported to give rise to the so-called problem of anal leakage. For this reason it is necessary to introduce considerable amounts of solids in the sucrose polyester phase by adding sufficiently solid fatty acids or a suitable source thereof.

In EP 0 236 288 a particular type of polyol polyesters which is partially liquid and partially solid at body temperature and the possible application thereof to baked products are described. This selection of polyol polyester is reported to avoid or reduce the problem of anal leakage.

When used to fully replace conventional fats in bakery margarines and products, polyol fatty acid polyesters of this type have been found to give unacceptable products and processing difficulties. In particular problems of sandy texture and stickiness during processing were encountered.

In EP-A 0 307 152 fat products are described which can be used in the preparation of dough compositions. According to the European application the fat products should have a penetration between 120 mm/10 and 350 mm/10 at 21°C. EP-A 0 307 152 specifically mentions pastry dough, biscuit dough, shortbread dough and shortcake dough.

We have found that fatty compositions comprising glyceride fat and non-digestible polyol fatty acid polyesters can advantageously be employed in the preparation of bakery products such as batters, toppings, butter creams etc., provided that:

(a) the fatty compositions contain these fat components in particular weight ratios,

(b) said fatty compositions are relatively soft at ambient temperature,

(c) the fat of such fatty compositions has a low solid fat content at 35°C and

(d) the fat present in the fatty compositions is relatively steep melting in the temperature range around ambient temperature.

Accordingly the present invention relates to a fatty composition comprising fat essentially consisting of a blend of one or more non-digestible polyol fatty acid polyesters and glyceride fat, the fat comprising from 30% to 75% by weight of the polyol fatty acid polyesters, said fat having an $N_{35}$ of less than 5 and a steepness of at least 0.5, and the fatty composition having an $S_{20}$ of less than 200 g.

The N-value for a fat at a certain temperature t is indicated as $N_t$ and indicates the equilibrium solid fat content of the composition at that temperature t, expressed in % of the weight of that composition. It can conveniently be measured by means of NMR, as described in Fette, Seifen, Anstrichmittel 80 (1978), 180-186.

The term steepness, whenever referred to in this document, is defined as follows:

Steepness = $(N_{15} - N_{25}) / N_{20}$

2

Thus, when a figure is found for the steepness of a particular fat or fat blend, this indicates that, relatively to its solid fat content at 20°C, said fat or blend is steep melting in the temperature range of 15-25°C. According to a preferred embodiment the steepness is at least 0.6, more preferably the steepness is at least 0.7. Most preferably the steepness of the fat in the present composition is at least 0.8. Generally the steepness does not exceed 1.8.

The hardness value S at 20°C ($S_{20}$) is determined by measuring the force (in grams) exerted by a sample when it is penetrated by a bar probe over a pre-set distance. The instrument used for such measurement is a Stevens-LFRA Texture Analyser provided with a stainless steel cylindrical probe having a diameter of 4.4 mm. The pretreatment of the samples includes tempering of said samples at a temperature of 15°C during 3 days, followed by tempering at 20°C for 24 hours. The penetration measurement should be carried out on a sample of relatively large volume (i.e. a sample of at least 100 gram).

The analytical instrument should be operated in its "Normal" mode using a penetration depth of 10 mm and a penetration rate of 2.0 mm/s. The penetration measurements should not be made within 2 cm of the sample's edge nor within 2.5 cm of each other. The S-value is obtained by calculating the mean figure for three penetration measurements.

The fatty compositions according to the present invention offer the advantage that they can advantageously be used in the preparation of high quality bakery products such as batters, toppings, butter creams, cakes, etc., having a relatively high specific volume. The specific volume is a measure for the amount of air included in such bakery products. The quality of fatty compositions for use in the above mentioned bakery products is normally judged on the basis of the specific volume of the bakery products obtained with such fatty compositions.

The specific volume can suitably be measured by the following procedure. The cream/cake margarine is tempered for at least 24 hours at a temperature of 20°C. The creaming procedure is carried out at a constant temperature of 20°C in a double jacketed bowl which is tempered by a water bath. The mixer used to cream the margarine is a Hobart ™ N50 mixer. The margarine is put in the bowl and is mixed for 30 seconds at speed 1 after which the sample is scraped down to the bottom of the bowl. Then the sample is mixed at speed 2 for another 2 minutes after which the whipped margarine is scraped down again. Mixing at speed 2 is continued for another 2.5 minutes after which the aerated product is scraped down again. From now on the margarine is mixed at speed 2 and scraped down after every 5 minutes, the scraping-interval not taking more than 30 seconds. The specific volume of the aerated margarine is normally measured after 10 minutes and/or 30 minutes of mixing.

The specific volume is measured by filling a cup of a volume of 100 ml with the aerated product in four stages, using a palette knife. The first three stages are used to fill down and round the cup and the last stage is used to fill the remaining hollows on the surface, while avoiding the creation of air pockets. The specific volume is calculated by means of the following formula:

Specific Volume = V / (a-b)

where:

V = volume of the cup (in cm³)

a = weight of the cup + aerated product (in g.)

b = weight of the cup (in g.)

The fatty composition according to the present invention offers the advantage that, upon whipping or creaming, it takes up air more quickly than similar compositions wherein the fat essentially consists of triglycerides.

It is an essential element of the present invention that the fat of the fatty composition essentially contains glyceride fat and polyol fatty acid polyesters in a particular weight ratio. Replacement of more than 75 wt.% of the glyceride fat by polyol fatty acid polyesters results in a fatty composition which give unsatisfactory results. According to a preferred embodiment of the present invention the fat present in the fatty composition comprises from 40% to 70% by weight of the polyol fatty acid polyesters. Weight ratios of the polyester component to the glyceride component preferably lie within the range of from 40:60 to 60:40.

Bakery products prepared by means of fatty compositions having an $N_{35}$ of more than 5 were found to have relatively low specific volumes. Bakery products obtained by utilizing a fatty composition according to the invention comprising fat having an $N_{35}$ of less than 3, yield bakery products having relatively high specific volumina.

The specific volume of bakery products prepared with the present fatty composition appears to also depend on the hardness of the fatty composition at ambient temperature (20°C). If the fatty composition used is relatively hard, i.e. has an $S_{20}$ of more than 200 g, low specific volumes are obtained. Fatty composition according to the invention having an $S_{20}$ of less than 130 appear to give very satisfactory results.

According to yet another preferred embodiment the present fatty composition comprises fat having an $N_{20}$ in the range of 5 to 30. More preferably the fat present has an $N_{20}$ in the range of 6 to 27.

The present invention relates to a fatty composition containing a substantial amount of fat. Preferably the fatty composition according to the present invention contains at least 50 wt.%, more preferably at least 75 wt.%

of fat. The term fatty composition as used in this document, encompasses products such as shortenings, which essentially consist of fat, as well as, for instance, cream margarine and cake margarine that contain a substantial amount of water.

In this specification the term 'polyol' is intended to refer to any aliphatic or aromatic compound which comprises at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alpha-methylglucoside. A generally used and preferred sugar polyol is sucrose.

In this specification by 'non-digestible' is meant that at least about 70 % by weight of the material concerned is not digested by the human body.

In this specification, unless otherwise indicated, the term 'fat' refers to edible fats and oils consisting essentially of triglycerides, and which may be of animal, vegetable or synthetic origin. The terms fat and oil are used interchangeably.

Slip melting point can be conveniently defined as the temperature at which the amount of solid phase in a melting fat or fatty substance has become so low that an air bubble is forced upwards in an open capillary filled with the fat or fatty substance.

Polyol fatty acid polyesters have been defined in general chemical terms hereinbefore. Preferably, polyol fatty acid polyesters derived from sugars or sugar alcohols are applied, and in particular, sugar fatty acid polyesters derived from disaccharides, such as sucrose.

In general fatty acids per se or naturally occurring fats and oils may be used as source for the fatty acid residues in the polyol fatty acid polyesters. If necessary, conventional techniques may be used to provide the required slip melting points. Suitably such techniques include full or partial hydrogenation, interesterification, transesterification and/or fractionation, and may be used before or after conversion of the polyols to polyol fatty acid polyesters. Suitable sources of the fatty acid residues are vegetable oils and fats, such as in particular partially or fully hydrogenated palm oils, palm kernel oils and soybean oils.

Polyol fatty acid polyesters are applied of which, on an average, more than 70 % of the polyol hydroxyl groups have been esterified with fatty acids. Preferably polyol fatty acid polyesters are used with higher degrees of conversion, in particular polyol fatty acid polyesters of which, on an average, more than 85 % or even over 95 % of the polyol hydroxyl groups have been esterified with fatty acids.

Suitable glyceride oils and fats include, optionally modified by partial hydrogenation, interesterification and/or fractionation to provide the required melting characteristic, coconut oil, palmkernel oil, palm oil, butter fat, soybean oil, safflower oil, cotton seed oil, rapeseed oil, poppy seed oil, corn oil, sunflower oil, groundnut oil, marine oils and mixtures thereof.

The products according to the present invention can comprise up to 50% by weight of water, however, preferably contain up to 35% by weight of a water phase. According to a preferred embodiment the fatty composition according to the invention contains a continuous fat phase and a dispersed aqueous phase. More preferably, the weight ratio between the continuous fat-phase and the dispersed water phase lie within the range of 75:25 to 90:10.

The blend of polyol fatty acid polyesters, preferably has a slip melting point of at least 25°C, more preferably at least 30°C. Most preferably the blend of polyol fatty acid polyesters present in the fatty composition has a slip melting point of at least 35°C.

The fatty composition according to the present invention may comprise in addition to polyol fatty acid polyesters, glyceride fat and water, minor ingredients conventionally found in bakery-margarine compositions, including anti-oxidants, such as naturally present or added tocopherols, butylated hydroxytoluene, -anisole or -quinone, acids such as citric acid, ascorbic acid, flavouring agents, taste enhancers, vitamins, such as in particular the fat-soluble vitamins, proteins, butter- or skim milk, salt, emulsifiers, such as mono- or diglycerides, lecithin, and the like.

Another aspect of the present invention is the use of a fatty composition according to the invention in the preparation of batter. The preparation of batter normally includes the admixture of flour, fat, egg and sugar under such conditions that an aerated, fluid composition is obtained. Batters generally have a less plastic nature than doughs.

Yet another aspect of the present invention is a batter comprising flour and fat in a ratio ranging from 1:3 to 3:1, wherein the fat contains from 30% to 75% by weight of the polyol fatty acid polyesters and said fat has a steepness of at least 0.5, preferably of at least 0.6. Preferably the batter according to the invention has a specific volume of at least 1.4 cm$^3$/g.

The present invention furthermore relates to an aerated fat-continuous composition comprising at least 40 wt.% fat, wherein the fat contains from 30% to 75% by weight of the polyol fatty acid polyesters and said fat has a steepness of at least 0.5, preferably of at least 0.6, the aerated composition having a specific volume of at least 2.0 cm³/g. Examples of aerated composition encompassed by the present invention are: toppings, butter creams etc.

A last aspect of the present invention is a cake comprising flour and fat in a ratio ranging from 1:3 to 3:1, wherein the fat contains from 30% to 75% by weight of the polyol fatty acid polyesters and said fat has a steepness of at least 0.5, preferably of at least 0.6, the cake having a specific volume of at least 2.0 cm³/g.

The invention is further illustrated by means of a number of examples. In these examples sucrose fatty acid polyester of different composition are referred to. The precise composition of these sucrose polyesters (SPE's) is as follows:

SPE1 : fatty acid residues derived from 55% fully hardened soybean oil, slip melting point 65°C, and 45% touch-hardened soybean oil, slip melting point 28°C; degree of esterification over 95%

SPE2 : fatty acid residues derived from touch-hardened soybean oil, slip melting point 28°C; degree of esterification over 95 %)

SPE3 : fatty acid residues derived from palm oil hardened to a slip melting point of 44°C.

SPE4 : fatty acid residues derived from 53% fully hardened palm kernel oil, slip melting point 39°C, and 47% fully hardened palm oil (slip melting point 58°C); degree of esterification over 95%

SPE5 : fatty acid residues derived from 62% fully hardened palm kernel oil, slip melting point 39°C, and 38% fully hardened palm oil (slip melting point 58°C); degree of esterification over 95%

SPE6 : fatty acid residues derived from 50% fully hardened soybean oil, slip melting point 65°C, and 50% touch-hardened soybean oil, slip melting point 28°C; degree of esterification over 95%

The $N_{30}$-value of the sucrose polyesters as well as the slip melting point thereof are recited in the table below:

| Sucrose Polyester | $N_{30}$ | Slip melting point |
|---|---|---|
| SPE1 | 44 | 42°C |
| SPE2 | 0 | 10°C |
| SPE3 | 17 | 34°C |
| SPE4 | 55 | 38°C |
| SPE5 | 33 | 36°C |
| SPE6 | 41 | 40°C |

Example 1

A cream/cake-margarine composition was prepared of the following formulation:

| ingredient | % by weight |
|---|---|
| fat phase | 83.1 |
| monoglyceride [1] | 0.1 |
| lecithin | 0.2 |
| skimmilk powder | 0.5 |
| K-sorbate | 0.1 |
| minor ingredients | 0.2 |
| water | balance |
| pH  4.5 | |

[1] Admul 6203 ™ (ex. Unimills, Zwijndrecht, the Netherlands).

The composition of the fat phase was as follows:

| ingredient | % by weight of the fat phase |
|---|---|
| palm oil | 20.0 |
| partially hardened fish oil (slip melting point 37°C) | 15.0 |
| partially hardened fish oil (slip melting point 41°C) | 15.0 |
| SPE1 | 25.0 |
| SPE2 | 25.0 |

The margarine was prepared on micro-scale (4.5-5 kg/hr) by admixing the separately prepared aqueous phase and fat phase in a pre-emulsion vessel and subsequently passing the pre-emulsion, having a temperature of about 55°C, through two scraped surface heat exchangers (A-unit) and a pin-crystallizer (C-unit). The processing conditions employed were as follows:

| Unit | A-unit | A-unit | C-unit |
|---|---|---|---|
| Rotation speed | 1200 rpm | 1200 rpm | 250 rpm |
| Jacket temperature | -7°C | 3°C | 20°C |
| Exit temperature | 20°C | 16°C | 18°C |
| Solid fat content | 12% | 14% | 14% |

The N-values of the fat phase at 20°, 35° and 40°C were 22, 4 and 1 respectively. The steepness of the fat phase was found to be 0.52. The margarine appeared to have an $S_{20}$ value of 34 g.

The cream/cake margarine was whipped for 30 minutes using the procedure described hereinbefore. The specific volume so obtained was 2.58 cm$^3$/g.

Example 2

Cream/cake margarines were prepared in a similar manner as described in Example 1. The concentration levels of the product ingredients employed were identical to those recited in Example 1, with the exception that the fat phase composition was changed. The composition of the fat phase of these margarine products was as follows:

| Margarine | 2A | 2B | 2C | 2D | 2E | 2G | 2H |
|---|---|---|---|---|---|---|---|
| SPE2 | 30 | 20 | 10 | 30 | 20 | 10 | |
| SPE3 | 30 | 40 | 50 | 30 | 40 | 50 | |
| Sunflower oil | 40 | 40 | 40 | 3 | 3 | 3 | 9 |
| Rape 38 [1] | | | | 10 | 10 | 10 | 24 |
| Rape 32 [2] | | | | 13 | 13 | 13 | 32 |
| Fish 37 [3] | | | | 14 | 14 | 14 | 35 |

[1] Rapeseed oil hardened to a slip melting point of 38 °C
[2] Rapeseed oil hardened to a slip melting point of 32 °C
[3] Fish oil hardened to a slip melting point of 37°C

The steepness and the N-values of the fat phase at 20°, 30° and 35°C and the $S_{20}$ value of the margarine product are recited below:

| Margarine | 2A | 2B | 2C | 2D | 2E | 2G | 2H |
|---|---|---|---|---|---|---|---|
| $N_{20}$ | 7 | 12 | 16 | 20 | 27 | 33 | 28 |
| $N_{30}$ | 0 | 1 | 3 | 5 | 8 | 12 | 8 |
| $N_{35}$ | 0 | -- | -- | 0 | 0 | 0 | 0 |
| Steepness | 1.27 | 1.10 | 0.91 | 0.94 | 0.80 | 0.72 | 0.84 |
| $S_{20}$ (in g) | 8 | 23 | 49 | 16 | 46 | 129 | 81 |

The creaming properties of the above cream/cake margarines were determined by means of the method described in example 1. The following results were obtained:

| Margarine | 2A | 2B | 2C | 2D | 2E | 2G | 2H |
|---|---|---|---|---|---|---|---|
| S.V. after 30 min. | 3.77 | 3.27 | 3.07 | 2.97 | 2.73 | 2.52 | 2.89 |
| S.V. after 10 min. | 3.27 | 2.80 | 2.58 | 2.52 | 2.45 | 1.89 | 1.78 |

Example 3

Cream/cake margarines were prepared in a similar manner as described in Example 1. The concentration levels of the product ingredients employed were identical to those recited in Example 1, with the exception that the fat phase composition was changed. The composition of the fat phase of these margarine products was as follows:

| Margarine | 3A | 3B | 3C | 3D | 3E |
|---|---|---|---|---|---|
| SPE1 | 25 | 18 | 12 | 6 | |
| SPE2 | 25 | 43 | 62 | 81 | |
| Sunflower oil | 5 | 4 | 2 | 1 | 9 |
| Rape 38 | 12 | 9 | 6 | 3 | 24 |
| Rape 32 | 16 | 12 | 9 | 4 | 32 |
| Fish 37 | 17 | 14 | 9 | 5 | 35 |

The steepness and the N-values of the fat phase at 20°, 30° and 35°C and the $S_{20}$ value of the margarine product are recited below:

| Margarine | 3A | 3B | 3C | 3D | 3E |
|---|---|---|---|---|---|
| $N_{20}$ | 23 | 16 | 9 | 3 | 28 |
| $N_{30}$ | 11 | 7 | 3 | 3 | 8 |
| $N_{35}$ | 5 | 3 | 2 | 0 | 1 |
| Steepness | 0.56 | 0.61 | 0.77 | 1.75 | 0.82 |
| $S_{20}$ (in g) | 116 | 19 | 9 | 1 | 99 |

The creaming properties of the above cream/cake margarines were determined by means of the method described in example 1. The following results were obtained:

| Margarine | 3A | 3B | 3C | 3D | 3E |
|-----------|------|------|------|------|------|
| S.V. after 30 min. | 2.58 | 2.89 | 2.73 | 2.39 | 2.58 |
| S.V. after 10 min. | 2.18 | 2.52 | 2.52 | 2.04 | 1.64 |

Apparently, the sucrose polyester containing margarine products take up air more readily than the triglyceride based cream/cake margarine.

Example 4

Cream/cake margarines were prepared in a similar manner as described in Example 1. The concentration levels of the product ingredients employed were identical to those recited in Example 1, with the exception that the fat phase composition was changed. The composition of the fat phase of these margarine products was as follows:

| Margarine | 4A | 4B | 4C | 4D | 4E | 4G |
|-----------|------|------|------|------|------|------|
| SPE4 | 30 | 40 | 50 | 30 | 40 | 50 |
| Sunflower oil | 70 | 60 | 50 | 34 | 42 | 51 |
| Rape 38 | | | | 9 | 5 | 2 |
| Rape 32 | | | | 13 | 6 | 3 |
| Fish 37 | | | | 14 | 7 | 4 |

The steepness and the N-values of the fat phase at 20°, 30° and 35°C and the $S_{20}$ value of the margarine product are recited below:

| Margarine | 4A | 4B | 4C | 4D | 4E | 4G |
|-----------|------|------|------|------|------|------|
| $N_{20}$ | 17 | 25 | 40 | 27 | 31 | 34 |
| $N_{30}$ | 2 | 5 | 17 | 6 | 9 | 13 |
| $N_{35}$ | 0 | 0 | 3 | 0 | 0 | 1 |
| Steepness | 0.80 | 0.69 | 0.41 | 0.68 | 0.58 | 0.44 |
| $S_{20}$ (in g) | 25 | 112 | 454 | 56 | 168 | 217 |

The creaming properties of the above cream/cake margarines were determined by means of the method described in example 1. The following results were obtained:

| Margarine | 4A | 4B | 4C | 4D | 4E | 4G |
|-----------|------|------|------|------|------|------|
| S.V. after 30 min. | 3.50 | 2.73 | 1.96 | 2.97 | 2.58 | 2.45 |
| S.V. after 10 min. | 2.89 | 2.28 | 1.46 | 2.45 | 2.13 | 2.00 |

A batter of 1603 g. was prepared from four of the above cream/cake margarine products, by admixing 3 g of baking powder with margarine, egg, sugar and flour in a 1:1:1:1 ratio in a Hobart ™ N50 flat beater. Before admixture the ingredients were pre-tempered at 20°C.

The specific volumes of the batters were as follows:

8

| Batter | 4A | 4B | 4D | 4E |
|--------|------|------|------|------|
| S.V. | 1.49 | 1.34 | 1.49 | 1.29 |

The batter is divided into four portions of 400 g and poured into 4 loaf tins (bottom 180x55 mm.; top 200x90 mm; height 70 mm). The batter is baked at 160°C for 1 hour and wrapped in plastic bags after 3 hours cooling. The specific volume of the cakes is determined (by averaging the result obtained for the four cakes baked with the same margarine) after the cake has been allowed to cool down for 24 hours.

| Cake | 4A | 4B | 4D | 4E |
|------|------|------|------|------|
| S.V. | 2.25 | 2.21 | 2.20 | 1.97 |

Example 5

Cream/cake margarines were prepared in a similar manner as described in Example 1. The concentration levels of the product ingredients employed were identical to those recited in Example 1, with the exception that the fat phase composition was changed. The composition of the fat phase of these margarine products was as follows:

| Margarine | 5A | 5B | 5C | 5D | 5E | 5G |
|-----------|----|----|----|----|----|----|
| SPE1 | 25 | 30 | | | | |
| SPE2 | 25 | 30 | 30 | 20 | 30 | 20 |
| SPE5 | | | 30 | 40 | | |
| SPE4 | | | | | 30 | 40 |
| Sunflower oil | 5 | 4 | 4 | 4 | 40 | 40 |
| Rape 38 | 12 | 9 | 9 | 9 | | |
| Rape 32 | 16 | 13 | 13 | 13 | | |
| Fish 37 | 17 | 14 | 14 | 14 | | |

The steepness and the N-values of the fat phase at 20°, 30° and 35°C and the $S_{20}$ value of the margarine product are recited below:

| Margarine | 5A | 5B | 5C | 5D | 5E | 5G |
|-----------|------|------|------|------|------|------|
| $N_{20}$ | 24 | 23 | 27 | 24 | 30 | 25 |
| $N_{30}$ | 11 | 11 | 5 | 4 | 10 | 6 |
| $N_{35}$ | 5 | 6 | 0 | 0 | 0 | 0 |
| Steepness | 0.51 | 0.46 | 0.80 | 0.87 | 0.66 | 0.71 |
| $S_{20}$ (in g) | 19 | 55 | 37 | 20 | 77 | 106 |

The creaming properties of the above cream/cake margarines were determined by means of the method described in example 1. The following results were obtained:

| Margarine | 5A | 5B | 5C | 5D | 5E | 5G |
|---|---|---|---|---|---|---|
| S.V. after 30 min. | 2.39 | 2.45 | 2.89 | 2.97 | 2.73 | 2.65 |
| S.V. after 10 min. | 2.13 | 2.23 | 2.45 | 2.58 | 2.34 | 1.92 |

Example 6

Cream/cake margarines were prepared in a similar manner as described in Example 1. The concentration levels of the product ingredients employed were identical to those recited in Example 1, with the exception that the fat phase composition was changed. The composition of the fat phase of these margarine products was as follows:

| Margarine | 6A | 6B | 6C |
|---|---|---|---|
| SPE2 | 30 | 20 | 10 |
| SPE6 | 30 | 40 | 50 |
| Sunflower oil | 40 | 40 | 40 |

The steepness and the N-values of the fat phase at 20°, 30° and 35°C and the $S_{20}$ value of the margarine product are recited below:

| Margarine | 6A | 6B | 6C |
|---|---|---|---|
| $N_{20}$ | 13 | 18 | 23 |
| $N_{30}$ | 4 | 6 | 8 |
| $N_{35}$ | 1 | 0 | 3 |
| Steepness | 0.79 | 0.65 | 0.60 |
| $S_{20}$ (in g) | 67 | 206 | 364 |

The creaming properties of the above cream/cake margarines were determined by means of the method described in example 1. The following results were obtained:

| Margarine | 6A | 6B | 6C |
|---|---|---|---|
| S.V. after 30 min. | 2.73 | 2.45 | 2.13 |
| S.V. after 10 min. | 2.39 | 2.09 | 1.75 |

## Claims

1. Fatty composition comprising fat essentially consisting of a blend of one or more non-digestible polyol fatty acid polyesters and glyceride fat, the fat comprising from 30% to 75% by weight of the polyol fatty acid polyesters, said fat having an $N_{35}$ of less than 5 and a steepness of at least 0.5, and the fatty composition having an $S_{20}$ of less than 200 g.

2. Fatty composition according to claim 1, wherein the fat comprises from 40% to 70% by weight of the polyol fatty acid polyesters.

3. Fatty composition according to claim 1 or 2, wherein the fat has an $N_{35}$ of less than 3.

4. Fatty composition according to any one of claim 1-3, wherein the composition has an $S_{20}$ of less than 130.

5. Fatty Composition according to any one of claims 1-4, wherein the fat has an $N_{20}$ in the range of 5 to 30.

6. Fatty composition according to any one of claims 1-5, wherein the composition comprises at least 50 wt.%, more preferably at least 75 wt.% fat.

7. Fatty composition according to any one of claims 1-6, wherein the composition comprises a continuous fat phase and a dispersed aqueous phase.

8. Fatty composition according to any one of claims 1-7, wherein the blend of polyol fatty acid polyesters has a slip melting point of at least 25°C, preferably at least 30°C.

9. Use of a fatty composition according to any one of claims 1-8 in the preparation of batter.

10. Batter comprising flour and fat in a ratio ranging from 1:3 to 3:1, wherein the fat contains from 30% to 75% by weight of the polyol fatty acid polyesters and said fat has a steepness of at least 0.5, preferably of at least 0.6.

11. Batter according to claim 10, wherein the batter has a specific volume of at least 1.4 cm³/g.

12. Aerated fat-continuous composition comprising at least 40 wt.% fat, wherein the fat contains from 30% to 75% by weight of the polyol fatty acid polyesters and said fat has a steepness of at least 0.5, preferably of at least 0.6, the aerated composition having a specific volume of at least 2.0 cm³/g.

13. Cake comprising flour and fat in a ratio ranging from 1:3 to 3:1, wherein the fat contains from 30% to 75% by weight of the polyol fatty acid polyesters and said fat has a steepness of at least 0.5, preferably of at least 0.6, the cake having a specific volume of at least 2.0 cm³/g.

## Patentansprüche

1. Fettzusammensetzung, die ein Fett umfaßt, das im wesentlichen aus einem Gemisch von einem oder mehreren unverdaulichen Polyolfettsäurepolyestern und Glyceridfett besteht, wobei das Fett 30 bis 75 Gew.-% der Polyolfettsäurepolyester enthält, einen $N_{35}$-Wert von weniger als 5 und eine Steilheit von mindestens 0,5 aufweist und wobei die Fettzusammensetzung einen $S_{20}$-Wert von weniger als 200 g hat.

2. Fettzusammensetzung gemäß Anspruch 1, worin das Fett 40 bis 70 Gew.-% der Polyolfettsäurepolyester enthält.

3. Fettzusammensetzung gemäß Anspruch 1 oder 2, worin das Fett einen $N_{35}$-Wert von kleiner als 3 hat.

4. Fettzusammensetzung gemäß irgendeinem der Ansprüche 1 bis 3, worin die Zusammensetzung einen $S_{20}$-Wert von kleiner als 130 hat.

5. Fettzusammensetzung gemäß irgendeinem der Ansprüche 1 bis 4, worin das Fett einen $N_{20}$-Wert im Bereich von 5 bis 30 hat.

6. Fettzusammensetzung gemäß irgendeinem der Ansprüche 1 bis 5, worin die Zusammensetzung mindestens 50 Gew.-%, vorzugsweise mindestens 75 Gew.-%, Fett enthält.

7. Fettzusammensetzung gemäß irgendeinem der Ansprüche 1 bis 6, worin die Zusammensetzung eine kontinuierliche Fettphase und eine dispergierte wäßrige Phase enthält.

8. Fettzusammensetzung gemäß irgendeinem der Ansprüche 1 bis 7, worin das Gemisch aus Polyolfettsäurepolyestern einen Steigschmelzpunkt von mindestens 25°C, vorzugsweise von mindestens 30°C, besitzt.

9. Verwendung einer Fettzusammensetzung gemäß irgendeinem der Ansprüche 1 bis 8 bei der Herstellung von Teig.

10. Teig, der Mehl und Fett in einem Verhältnis, das zwischen 1:3 bis 3:1 liegt, umfaßt, worin das Fett 30 bis 75 Gew.-% der Polyolfettsäurepolyester enthält und eine Steilheit von mindestens 0,5, vorzugsweise von mindestens 0,6, besitzt.

11. Teig gemäß Anspruch 10, worin der Teig ein spezifisches Volumen von mindestens 1,4 cm³/g besitzt.

12. Belüftete fett-kontinuierliche Zusammensetzung, die mindestens 40 Gew.-% Fett umfaßt, worin das Fett 30 bis 75 Gew.-% der Polyolfettsäurepolyester enthält und eine Steilheit von mindestens 0,5, vorzugsweise von mindestens 0,6, aufweist, und die belüftete Zusammensetzung ein spezifisches Volumen von mindestens 2,0 cm³/g besitzt.

13. Kuchen, der Mehl und Fett in einem Verhältnis, das zwischen 1:3 bis 3:1 liegt, umfaßt, worin das Fett 30 bis 75 Gew.-% der Polyolfettsäurepolyester enthält und eine Steilheit von mindestens 0,5, vorzugsweise von mindestens 0,6, aufweist und der Kuchen ein spezifisches Volumen von mindesten 2,0 cm³/g besitzt.

## Revendications

1. Composition de corps gras comprenant de la matière grasse essentiellement composée d'un mélange d'un ou plusieurs polyesters d'acide gras et de polyol indigestes et de matière grasse glycéride, la matière grasse comprenant de 30% à 75% en masse des polyesters d'acide gras et de polyol, ladite matière grasse ayant un $N_{35}$ inférieur à 5 et une fusion rapide d'au moins 0,5, et la composition de corps gras ayant un $S_{20}$ inférieur à 200 g.

2. La composition de corps gras selon la revendication 1, dans laquelle la matière grasse comprend de 40% à 70% en masse des polyesters d'acide gras et de polyol.

3. La composition de corps gras selon la revendication 1 ou 2, dans laquelle la matière grasse a un $N_{35}$ inférieur à 3.

4. La composition de corps gras selon l'une des revendication 1 à 3, dans laquelle la composition a un $S_{20}$ inférieur à 130.

5. La composition de corps gras selon l'une des revendications 1 à 4, dans laquelle la matière grasse a un $N_{20}$ compris dans la gamme allant de 5 à 30.

6. La composition de corps gras selon l'une des revendications 1 à 5, dans laquelle la composition comprend au moins 50% en masse, et de préférence au moins 75% en masse de matière grasse.

7. La composition de corps gras selon l'une des revendications 1 à 6, dans laquelle la composition comprend une phase grasse continue et une phase aqueuse dispersée.

8. La composition de corps selon l'une des revendications 1 à 7, dans laquelle le mélange de polyesters d'acide gras et de polyol a un point de fusion d'équilibre d'au moins 25°C, de préférence d'au moins 30°C.

9. Utilisation d'une composition de corps gras selon l'une des revendications 1 à 8 pour la préparation d'une pâte à frire.

10. Pâte à frire comprenant de la farine et de la matière grasse dans un rapport allant de 1 pour 3 à 3 pour 1, dans laquelle la matière grasse contient de 30% à 75% en masse des polyesters d'acide gras et de polyol et ladite matière grasse a une fusion rapide d'au moins 0,5, de préférence d'au moins 0,6.

11. La pâte à frire selon la revendication 10, dans laquelle la pâte à frire a un volume spécifique d'au moins 1,4 cm³/g.

12. Composition aérée à matière grasse continue comprenant au moins 40% en masse de matière grasse, dans laquelle la matière grasse contient de 30% à 75% en masse des polyesters d'acide gras et de polyol et ladite matière grasse a une fusion rapide d'au moins 0,5, de préférence d'au moins 0,6, la composition aérée ayant un volume spécifique d'au moins 2,0 cm³/g.

13. Gâteau comprenant de la farine et de la matière grasse dans un rapport en masse allant de 1 pour 3 à 3 pour 1, dans lequel la matière grasse contient de 30% à 75% en masse des polyesters d'acide gras et de polyol et ladite matière grasse a une fusion rapide d'au moins 0,5, de préférence d'au moins 0,6, le gâteau ayant un volume spécifique d'au moins 2,0 cm³/g.